(19) Europäisches Patentamt / European Patent Office / Office européen des brevets

(11) **EP 3 391 135 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **16825711.1**

(22) Anmeldetag: **15.12.2016**

(51) Internationale Patentklassifikation (IPC):
**G02F 1/155** *(2006.01)*   **B32B 17/10** *(2006.01)*

(52) Gemeinsame Patentklassifikation (CPC):
**G02F 1/155; B32B 17/10036; B32B 17/10174; B32B 17/10495;** G02F 1/13439; G02F 2001/1536

(86) Internationale Anmeldenummer:
**PCT/EP2016/081100**

(87) Internationale Veröffentlichungsnummer:
**WO 2017/102900 (22.06.2017 Gazette 2017/25)**

(54) **ELEKTRISCH SCHALTBARE VERGLASUNG UMFASSEND FLÄCHENELEKTRODEN MIT ANISOTROPER LEITFÄHIGKEIT**

ELECTRICALLY SWITCHABLE GLAZING COMPRISING SURFACE ELECTRODES HAVING ANISOTROPIC CONDUCTIVITY

VITRAGE COMMUTABLE ELECTRIQUEMENT COMPRENANT DES ELECTRODES DE SURFACE A CONDUCTIVITE ANISOTROPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2015 EP 15200429**

(43) Veröffentlichungstag der Anmeldung:
**24.10.2018 Patentblatt 2018/43**

(73) Patentinhaber: **SAINT-GOBAIN GLASS FRANCE 92400 Courbevoie (FR)**

(72) Erfinder:
• **LETOCART, Philippe**
  **4730 Raeren (BE)**
• **KOLTER, Magnus**
  **52070 Aachen (DE)**

(74) Vertreter: **Gebauer, Dieter Edmund Splanemann Patentanwälte Partnerschaft Rumfordstraße 7 80469 München (DE)**

(56) Entgegenhaltungen:
EP-A1- 2 660 652      WO-A1-2010/032070
WO-A1-2016/154064    WO-A2-2016/126460
DE-T5-112012 006 778  JP-A- H0 255 341
US-A1- 2014 022 621

EP 3 391 135 B1

**Beschreibung**

Die Erfindung betrifft eine elektrisch schaltbare Verglasung mit Flächenelektroden anisotroper Leitfähigkeit, ein Verfahren zu deren Herstellung und deren Verwendung.

Eine Art von modernen, aktiven Verglasungen sind Verglasungen mit schaltbaren oder regelbaren optischen Eigenschaften. Bei solchen Verglasungen kann beispielsweise die Transmission von Licht in Abhängigkeit einer angelegten elektrischen Spannung aktiv beeinflusst werden. Der Benutzer kann beispielsweise von einen transparenten in einen nicht transparenten Zustand der Verglasung schalten, um den Einblick in einen Raum von außen zu verhindern. Bei anderen Verglasungen kann die Transmission stufenlos geregelt werden, beispielsweise um den Eintrag von Sonnenenergie in einem Raum zu regulieren. Dadurch wird eine unerwünschte Erwärmung von Gebäuden oder Fahrzeuginnenräumen vermieden und der durch Klimaanlagen verursachte Energieverbrauch bzw. $CO_2$-Ausstoß reduziert. Aktive Verglasungen dienen folglich nicht nur der optisch ansprechenden Gestaltung von Fassaden und einer angenehmen Lichtgestaltung in Innenräumen, sondern sind auch unter energetischen und ökologischen Gesichtspunkten vorteilhaft.

Die bekannten schaltbaren oder regelbaren Verglasungen beruhen auf unterschiedlichen technischen Prinzipien. Elektrochrome Verglasungen sind beispielsweise aus US 20120026573 A1 und WO 2012007334 A1 bekannt.

Die Erfindung ist besonders auf elektrochrome Verglasungen gerichtet, jedoch nicht auf diese beschränkt. Elektrochrome Verglasungen umfassen mindestens eine elektrochemisch aktive Schicht, die in der Lage ist, reversibel Ladungen einzulagern. Die Oxidationszustände im eingelagerten und ausgelagerten Zustand unterscheiden sich dabei in ihrer Farbgebung, wobei einer dieser Zustände transparent ist. Die Einlagerungsreaktion ist über die von außen angelegte Potentialdifferenz steuerbar. Der Grundaufbau der elektrochromen Verglasung umfasst somit mindestens ein elektrochromes Material, wie Wolframoxid, das sowohl mit einer Flächenelektrode, als auch einer Ladungsquelle, wie einem ionenleitfähigen Elektrolyten, in Kontakt steht. Darüber hinaus enthält der elektrochrome Schichtaufbau eine Gegenelektrode, die ebenfalls in der Lage ist reversibel Kationen einzulagern, und mit dem ionenleitfähigen Elektrolyten in Berührung steht, sowie eine weitere Flächenelektrode, die sich an die Gegenelektrode anschließt. Die Flächenelektroden sind mit einer externen Spannungsquelle verbunden, wodurch die an die aktive Schicht angelegte Spannung reguliert werden kann. Die Flächenelektroden sind meist dünne Schichten elektrisch leitfähigen Materials, häufig Indium-Zinnoxid (ITO). Häufig ist zumindest eine der Flächenelektroden direkt auf die Oberfläche einer der Einzelscheiben des Verbundglases aufgebracht, beispielsweise mittels Kathodenzerstäubung (Sputtern).

Sputterprozesse erfordern höchste Sorgfalt bezüglich der Reinheit der zu beschichtenden Oberflächen und sind im Vakuum auszuführen. Bereits kleinste Verunreinigungen oder einzelne Staubkörner innerhalb der Schichtenabfolge können zu im Produkt sichtbaren Defekten führen. Leitfähige Partikel im Schichtstapel führen beispielsweise zu einem Kurzschluss der beiden transparenten elektrisch leitfähigen Schichten. Der gleiche Effekt wird auch von einem Partikel auf dem Glassubstrat hervorgerufen, der durch die vom Partikel selbst eingebrachten Spannungen zu einer lokalen Delamination führt. Je nach Lage des delaminierten Bereichs im Schichtenstapel ist auch dabei ein Kurzschluss zu erwarten. Die räumliche Ausdehnung der durch den Kurzschluss hervorgerufenen sichtbaren Fehlstelle geht weit über den eigentlichen Defekt hinaus, da in der Umgebung des Defekts ein Spannungsabfall auftritt. Dieser Bereich des Spannungsabfalls ist als farblich von der Umgebung abweichender Bereich der elektrochromen Verglasung für den Betrachter sichtbar.

Ein Verfahren zur Reparatur von Defektstellen ist die Isolation der den Kurzschluss verursachenden Defektstelle mittels eines Laserschnittverfahrens, wie beispielsweise in WO 2015032535 A1 offenbart. Dabei wird der Defekt durch eine isolierende Trennlinie von dem restlichen Schichtaufbau getrennt, wodurch der defektbedingte Spannungsabfall sich nicht mehr auf die umliegende Beschichtung auswirken kann. Der verbleibende Defekt ist in der Regel so gering, dass er für den Betrachter nicht mehr störend wirkt. Dieses Laserverfahren ist aufwändig und teuer und somit nur bedingt geeignet um die Ausschussquote des Beschichtungsprozesses zu vermindern.

US 2014/0022621 A1 offenbart eine elektrochrome Vorrichtung mit einer elektrisch isolierenden Barriereschicht, die zwischen elektrisch leitfähiger Schicht und aktiver Schicht angebracht ist. Ist nun im Beschichtungsprozess ein Fremdpartikel anwesend, so wird die Beschichtung zumindest teilweise auf diesem Partikel anstelle des Substrats abschieden. Dieser Partikel ruft im weiteren Verlauf eine lokale Delamination hervor, die zu einem Kurzschluss führen kann. Die Barriereschicht zwischen elektrisch leitfähiger Schicht und aktiver Schicht verhindert laut US 2014/0022621 A1 einen derartigen Kurzschluss. Dies ist jedoch nur der Fall sofern die Delamination so erfolgt, dass die Barriereschicht zwischen den beiden elektrisch leitfähigen Schichten erhalten bleibt und nicht selbst Teil des delaminierten Bereichs ist. Eine Barriereschicht, die in direkter Nachbarschaft zur aktiven Schicht angebracht ist, muss ferner über eine ausreichend hohe elektrochemische Stabilität verfügen, so dass diese möglichst nicht von dem in der aktiven Schicht stattfindenden Redox-Vorgang beeinflusst ist. Die für die Barriereschicht gemäß US 2014/0022621 A1 zur Verfügung stehenden Materialien sind somit begrenzt. Darüber hinaus ist der Kontaktwiderstand zwischen Barriereschicht und aktiver Schicht unerwünscht hoch. EP 2660652 A1 und DE 112012006778 T5 offenbaren jeweils Displays mit einem Aufbau, bei dem eine isolierende Schicht vorgesehen ist. WO 2010/032070 A1 offenbart eine laminierte Verglasung mit einer SPD-Folienanordnung, die zwischen zwei Lagen Silikat-Floatglas laminiert ist. Die SPD-Folienanordnung umfasst eine aktive Schicht, die das Schwebeteilchen-Material enthält und die zwischen einer ersten planaren Elektrodenschicht nd einer zweiten planaren Elektrodenschicht laminiert ist. Jede planare Elektrodenschicht umfasst ein PET-Substrat mit einer elektrisch leitenden ITO-Beschichtung, die jeweils auf der Innenoberfläche davon angeordnet ist, so dass jede ITO-Beschichtung mit der aktiven Schicht in direktem Kontakt steht. Auf der gegenüberliegenden äußeren Oberfläche jedes PET-Substrats befindet sich jeweils eine zweite elektrisch leitende ITO-Beschichtung, sowie elektrische Anschlüsse zur Stromverbindung nach außen. Die beiden entfernten elektrischen Anschlussbereiche stellen keinen direkten galvanischen Kontakt zu den innerseitlichen ITO-Beschichtungen der planaren Elektrodenschichten her sondern koppeln kapazitiv miteinander. Die SPD-Folienanordnung ist außen unter Zwischenlagerung jeweils einer Zwischenschicht über jeweils eine Klebeschicht mit den Silikat-Floatgläsern laminiert.

Vor diesem Hintergrund ist es wünschenswert, die Toleranz elektrisch schaltbarer Verglasungen gegenüber lokalen Defekten zu verbessern, ohne jedoch die erwähnten Nachteile in Kauf nehmen zu müssen.

Aufgabe der Erfindung ist es eine elektrisch schaltbare Verglasung, die höhere Toleranz gegenüber lokalen Defekten besitzt, sowie ein Verfahren zu deren Herstellung bereitzustellen.

Die Aufgabe der vorliegenden Erfindung wird erfindungsgemäß durch eine elektrisch schaltbare Verglasung, ein Verfahren zu deren Herstellung und deren Verwendung gemäß der unabhängigen Ansprüche 1, 12 und 14 gelöst. Bevorzugte Ausführungen der Erfindung gehen aus den Unteransprüchen hervor.

Die Erfindung umfasst eine Verglasung mit elektrisch schaltbaren Eigenschaften, wobei mindestens ein erstes Substrat, eine erste elektrisch leitfähige Schicht, eine aktive Schicht und eine zweite elektrisch leitfähige Schicht in dieser Reihenfolge flächenmäßig zueinander angeordnet sind. Mindestens eine der elektrisch leitfähigen Schichten, d.h. die erste elektrisch leitfähige Schicht und/oder die zweite elektrisch leitfähige Schicht, enthält dabei mindestens zwei Barriereschichten, im Weiteren als "elektrisch isolierende" Barriereschichten bezeichnet. Die elektrisch isolierenden Barriereschichten sind im Sinne der Erfindung innerhalb der elektrisch leitfähigen Schicht angeordnet, d. h. die beiden zum Substrat parallel verlaufenden Oberflächen jeder Barriereschicht sind flächenmäßig vollständig vom Material der elektrisch leitfähigen Schicht bedeckt. Beispielsweise weist die erste elektrisch leitfähige Schicht mindestens zwei Barriereschichten auf, die flächig innerhalb der ersten elektrisch leitfähigen Schicht angeordnet sind, wobei die elektrisch isolierenden Barriereschichten von Schichtabschnitten der ersten elektrisch leitfähigen Schicht flächenmäßig vollständig bedeckt sind. Alternativ oder zusätzlich zur ersten elektrisch leitfähigen Schicht, weist die zweite elektrisch leitfähige Schicht mindestens zwei Barriereschichten auf, die flächig innerhalb der zweiten elektrisch leitfähigen Schicht angeordnet sind, wobei die elektrisch isolierenden Barriereschichten von Schichtabschnitten der zweiten elektrisch leitfähigen Schicht flächenmäßig vollständig bedeckt sind.

Eine schaltbare Verglasung weist durch die Verwendung einer Barriereschicht eine hohe Toleranz gegenüber lokalen Defekten auf, da diese Barriereschicht die erste leitfähige Schicht und die zweite leitfähiger Schicht auch nach Delamination voneinander trennt. Damit einhergehend wird der Spannungsabfall im Umkreis des Defekts minimiert, da die zum Schichtstapel perpendikulare Leitfähigkeit durch die Barriereschichten stark vermindert wird. Wenn nach Delamination ein Anteil einer elektrisch leitfähigen Schicht oberhalb der Barriereschicht (d.h. zwischen Barriereschicht und aktiver Schicht im ursprünglichen Schichtstapel) verbleibt, so ist die Schichtdicke des verbleibenden Anteils geringer als die Gesamtschichtdicke der leitfähigen Schicht ohne Verwendung von Barriereschichten. Der Flächenwiderstand dieses verbleibenden dünneren Anteils der elektrisch leitfähigen Schicht ist somit wesentlich höher, da der Flächenwiderstand umgekehrt proportional zur Schichtdicke ansteigt. Der höhere Widerstand geht mit einem geringeren Kurzschlussstrom zwischen erster elektrisch leitfähiger Schicht und zweiter elektrisch leitfähiger Schicht einher, wodurch die Auswirkungen der Delamination auf die Produktqualität vermindert werden. Die Anordnung der Barriereschicht innerhalb einer elektrisch leitfähigen Schicht ist somit aufgrund der Unterteilung der leitfähigen Schicht in mehrere Schichtabschnitte besonders vorteilhaft. Sollte die Delamination so erfolgen, dass keine Barriere übrig ist, so ist die Stromstärke durch die geringfügige Dicke der verbleibenden elektrisch leitfähigen Schicht und die damit einhergehende geringe laterale Leifähigkeit der Elektrode limitiert. Die Stelle der Delamination bleibt im Produkt sichtbar, ist jedoch optisch unauffällig, da ein Kurzschluss und der damit einhergehende großflächig sichtbare Spannungsabfall komplett vermieden oder zumindest entscheidend verringert werden.

Vorteilhafterweise steht ein Schichtanteil der elektrisch leitfähigen Schichten in unmittelbarem Kontakt zu der aktiven Schicht. Da die aktive Schicht in direkter Nachbarschaft zu einer elektrisch leitfähigen Schicht angebracht ist, tritt ein verringerter Kontaktwiderstand zwischen Flächenelektrode (aus Barriereschichten und leitfähigen Schichten) und aktiver Schicht auf. Ferner ist eine höhere Flexibilität bezüglich der Materialauswahl der elektrisch isolierenden Barriereschichten gegeben, da diese nicht in direktem Kontakt zur aktiven Schicht stehen und somit nicht über die dafür erforderliche elektrochemische Stabilität verfügen müssen. Außerhalb der Fehlstelle ist der Kontaktwiderstand der elektrisch schaltbaren Verglasung nicht durch die Verwendung der Barriereschicht gehemmt, da die aktive Schicht in unmittelbarem Kontakt zu einer elektrisch leitfähigen Schicht guter Leitfähigkeit steht und somit ein ausreichender Elektronenübertritt von der leitfähigen Schicht zur aktiven Schicht gewährleistet wird. Der defektbedingte Kurzschluss ist umso größer, je höher die Leitfähigkeit der beteiligten Schichten ist. Anderseits wird eine gewisse Mindestleitfähigkeit der Flächenelektroden in Nachbarschaft zur aktiven Schicht benötigt, da ansonsten die Funktionalität der Verglasung eingeschränkt ist. Eine Einschränkung der Funktionalität zeigt sich beispielsweise durch eine Verringerung der Schaltgeschwindigkeit oder auch eine Verschlechterung der Homogenität im geschalteten Zustand. Diese Leitfähigkeit in Nachbarschaft zur aktiven Schicht kann verbessert werden, wenn aktive Schicht und erste elektrisch leitfähige Schicht und/oder zweite elektrisch leitfähige Schicht in direktem Kontakt zueinander stehen.

In einer alternativen Ausführungsform, welche nicht Teil der Erfindung ist, ist nur eine Barriereschicht innerhalb der ersten und/oder zweiten elektrisch leitfähigen Schicht angeordnet und eine weitere Barriereschicht ist zwischen elektrisch leitfähiger Schicht und aktiver Schicht, unmittelbar an die aktive Schicht angrenzend, angebracht. Diese Ausführungsform besitzt weiterhin das verbesserte Verhalten bei Delamination, da mindestens eine der leitfähigen Schichten durch die Barriereschicht in mehrere Schichtanteile unterteilt ist.

Die erste elektrisch leitfähige Schicht und die darin befindlichen elektrisch isolierenden Barriereschichten fungieren als erste Flächenelektrode der elektrisch schaltbaren Verglasung, während die zweite elektrisch leitfähige Schicht und die innerhalb dieser eingebrachten Barriereschichten als zweite Flächenelektrode verwendet werden. Die erste Flächenelektrode und die zweite Flächenelektrode sind bevorzugt transparent. Dies hat den Vorteil, dass die Verglasung bei Bedarf durchlässig für Tageslicht ist, ohne dass die Lichtfarbe beeinflusst wird.

Die von einer oder mehreren Barriereschichten durchzogene elektrisch leitfähige Schicht zeigt bezüglich ihrer elektrischen Leitfähigkeit eine Anisotropie, wobei die horizontale Leitfähigkeit wesentlich höher ist als die perpendikulare Leitfähigkeit. Als horizontale Leitfähigkeit ist in diesem Sinne die Leitfähigkeit der ersten elektrisch leitfähigen Schicht und der zweiten elektrisch leitfähigen Schicht parallel zur jeweiligen Schicht definiert, während die perpendikulare Leitfähigkeit der Leitfähigkeit senkrecht zum Schichtstapel entspricht. Dabei wird in diesem Fall der gesamte Schichtaufbau der elektrisch leitfähigen Schicht inklusive Barriereschicht betrachtet. Die horizontale Leitfähigkeit ist im Sinne der Erfindung möglichst hoch um eine gute elektrische Kontaktierung der aktiven Schicht zu erreichen, wohingegen die perpendikulare Leitfähigkeit gerade so groß sein sollte, wie es für eine uneingeschränkte Funktionalität der elektrisch schaltbaren Scheibe nötig ist. Die hohe Defekttoleranz wird durch eben diese Senkung der vertikalen Leitfähigkeit erreicht.

Im Sinne der Erfindung sind mehrere elektrisch isolierende Barriereschichten innerhalb einer der elektrisch leitfähigen Schichten eingebracht. Diese Barriereschichten und die jeweilige umgebende elektrisch leitfähige Schicht bilden jeweils eine Flächenelektrode der schaltbaren Verglasung. Um eine Verbesserung der Defekttoleranz der elektrisch schaltbaren Verglasung zu erzielen ist bereits eine einzelne Barriereschicht innerhalb einer der elektrisch leitfähigen Schichten ausreichend. Eine darüber hinausgehende Verbesserung kann erreicht werden, indem in beiden elektrisch leitfähigen Schichten je mindestens eine Barriereschicht eingebracht wird.

Ein Aufbau mit einer oder mehreren Barriereschichten in nur einer elektrisch leitfähigen Schicht, bei der die andere elektrisch leitfähige Schicht keinerlei Barriereschichten enthält ist nicht nur vorteilhaft bezüglich geringerer Produktionskosten, sondern auch hinsichtlich einer Verbesserung der Haftung der Schichten und einer Verminderung der innerhalb des Schichtstapels entstehenden Spannungen. So ist zum Beispiel ein Tempern der entsprechenden elektrisch leitfähigen Schicht nicht zwangsläufig nötig, wenn diese keine Barriereschichten enthält.

Da häufig eine unsymmetrische Defektentstehung zu beobachten ist, hat es sich in der Praxis als sinnvoll erwiesen, zumindest die zweite elektrisch leitfähige Schicht mit mindestens einer Barriereschicht auszustatten. Dabei ist der Schichtstapel in der folgenden Reihenfolge auf dem ersten Substrat abgeschieden: erste elektrisch leitfähige Schicht, aktive Schicht und zweite elektrisch leitfähige Schicht. Die zweite elektrisch leitfähige Schicht ist demnach diejenige der elektrisch leitfähigen Schichten, die am weitesten vom ersten Substrat entfernt ist. Wenn nach Abscheiden der ersten elektrisch leitfähigen Schicht ohne Barriereschichten oder nach Abscheiden der aktiven Schicht auf dieser ersten elektrisch leitfähigen Schicht eine Delamination eintritt, kann der dadurch auftretende Kurzschluss durch Barriereschichten in der zweiten elektrisch leitfähigen Schicht vermindert werden. Eine Delamination während der Abscheidung der ersten elektrisch leitfähigen Schicht oder der aktiven Schicht stellt einen der häufiger auftretenden Effekte dar. In diesem Fall löst sich der delaminierte Partikel mit hoher Wahrscheinlichkeit vor Abscheidung der zweiten elektrisch leitfähigen Schicht vollständig ab. Welcher prozentuale Anteil der ersten elektrisch leitfähigen Schicht dabei abgespalten wird, ist von der jeweiligen Defektstruktur abhängig. Die zweite elektrisch leitfähige Schicht wird somit auf den delaminierten Bereich abgeschieden, wodurch ein Kurzschluss zwischen dem verbleibenden Anteil der ersten elektrisch leitfähigen Schicht und der zweiten elektrisch leitfähigen Schicht entsteht. Sofern aus Kostengründen und zur Vereinfachung des Verfahrens nur innerhalb einer der elektrisch leitfähigen Schichten Barriereschichten eingebracht werden sollen, so ist es demnach vorteilhaft die Barriereschichten in die zweite elektrisch leitfähige Schicht einzubringen, da die zweite elektrisch leitfähige Schicht höchstwahrscheinlich nicht delaminiert ist.

Ist eine erste Schicht flächenmäßig oberhalb einer zweiten Schicht angeordnet, so bedeutet dies im Sinne der Offenbarung, dass die erste Schicht weiter vom nächstliegenden Substrat entfernt angeordnet ist als die zweite Schicht. Ist eine erste Schicht unterhalb einer zweiten Schicht angeordnet ist, so bedeutet dies im Sinne der Offenbarung, dass die zweite Schicht weiter vom nächstliegenden Substrat entfernt angeordnet ist als die erste Schicht. Eine Schicht im Sinne der Erfindung kann aus einem Material bestehen. Eine Schicht kann aber auch zwei oder mehrere Einzelschichten unterschiedlichen Materials umfassen.

Gemäß der Offenbarung ist die erste elektrisch leitfähige Schicht und/oder die zweite elektrisch leitfähige Schicht homogen, d.h. sie besteht aus einem gleichen Material. Die mindestens eine Barriereschicht unterteilt demnach die elektrisch leitfähige Schicht in zwei Schichtabschnitte aus gleichem Material, wobei es bevorzugt ist, wenn die beiden Schichtabschnitte der Barriereschicht unmittelbar angrenzen (direkter Kontakt). Bei erfindungsgemäß mehreren Barriereschichten gilt dies entsprechend, wobei die elektrisch leitfähige Schicht hier in eine Mehrzahl Schichtabschnitte aus gleichem Material unterteilt wird, wobei es bevorzugt ist, wenn zwei Schichtabschnitte aus gleichem Material einer jeweiligen Barriereschicht unmittelbar angrenzen.

Bei einer weiteren Ausgestaltung der offenbarten Verglasung haben die erste elektrisch leitfähige Schicht, die aktive Schicht, die zweite elektrisch leitfähige Schicht und die mindestens eine Barriereschicht eine selbe flächige Erstreckung, d.h. sie schließen an den Schichträndern bündig ab. Ist eine erste Schicht oberhalb oder unterhalb einer zweiten Schicht angeordnet, so bedeutet dies im Sinne der Offenbarung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird. Sind eine erste und eine zweite Schicht unmittelbar benachbart, so befinden sich keine weiteren Schichten zwischen der ersten und der zweiten Schicht und diese stehen flächenmäßig in direktem Kontakt.

Ist eine erste Schicht innerhalb einer zweiten Schicht angebracht, so ist die erste Schicht so von der zweiten Schicht umgeben, dass die Oberfläche der ersten Schicht vollständig von der zweiten Schicht bedeckt ist. Im Sinne der Erfindung bedeutet dies, dass die elektrisch isolierenden Barriereschichten, die innerhalb der elektrisch leitfähigen Schicht angeordnet sind, flächenmäßig vollständig von der umgebenden elektrisch leitfähigen Schicht bedeckt sind. Innerhalb der Flächenelektroden besteht demnach eine alternierende Schichtenabfolge von Schichtabschnitten der elektrisch leitfähigen Schicht und elektrisch isolierender Barriereschicht, wobei die äußeren Schichten stets von der elektrisch leitfähigen Schicht gebildet werden. Diese Definition bezieht sich ausschließlich auf die flächenmäßige Anordnung der Schichten. An den Kanten des Substrats oder an der Grenze zu einem unbeschichteten Bereich liegt die Barriereschicht bevorzugt offen und ist nicht von der elektrisch leitfähigen Schicht umgeben.

Zusätzlich zu den innerhalb der leitfähigen Schichten angeordneten Barriereschichten können optional weitere Barriereschichten im Schichtstapel enthalten sein, die sich nicht innerhalb der elektrisch leitfähigen Schichten befinden.

Der Schichtstapel umfassend die erste elektrisch leitfähige Schicht, die aktive Schicht und die zweite elektrisch leitfähige Schicht erstreckt sich bevorzugt über die gesamte Oberfläche der Substrate, alternativ aber auch nur über einen Teil der Oberfläche der Substrate.

Die elektrisch leitfähigen Schichten können direkt auf der Oberfläche der Substrate aufgebracht sein. Die elektrisch leitfähigen Schichten und die aktive Schicht können alternativ auf einer Trägerfolie oder einem Trägerglas aufgebracht sein, die mit den Substraten verklebt ist.

In einer bevorzugten Ausführungsform der erfindungsgemäßen Verglasung durchläuft die elektrisch isolierende Barriereschicht die erste elektrisch leitfähige Schicht und/oder die zweite elektrisch leitfähige Schicht so, dass ein Schichtanteil von mindestens 1% der Gesamtdicke, bevorzugt mindestens 5% der Gesamtdicke, der jeweiligen elektrisch leitfähigen Schicht zwischen elektrisch isolierender Barriereschicht und aktiver Schicht angeordnet ist. Die elektrisch leitfähigen Schichten werden somit von den Barriereschichten in mehrere Einzelschichten unterteilt, wobei eine alternierende Reihenfolge von leitfähigen Schichten und Barriereschichten vorliegt und die leitfähigen Schichten den Schichtstapel abschließen. Liegt ein Anteil der elektrisch leitfähigen Schicht von mindestens 1% oberhalb der Barriereschicht (zwischen Barriereschicht und aktiver Schicht), so wird die Leitfähigkeit in direkter Nachbarschaft zur aktiven Schicht verbessert, wodurch ein verringerter Kontaktwiderstand am Schichtübergang vorliegt. Eine weitere Verbesserung ist bei Schichtanteilen von mindestens 5% der elektrisch leitfähigen Schicht oberhalb der obersten Barriereschicht festzustellen. Ein Schichtanteil von 1% der Gesamtdicke der elektrisch leitfähigen Schicht oberhalb der Barriereschicht ist dabei so zu interpretieren, dass auf einem Substrat eine elektrisch leitfähige Schicht mit einer Dicke von 99% der Gesamtdicke aller elektrisch leitfähigen Schichten auf diesem Substrat vorliegt, gefolgt von einer elektrisch isolierenden Barriereschicht, auf der eine weitere elektrisch leitfähige Schicht mit einer Dicke von 1% bezogen auf die Gesamtdicke der elektrisch leitfähigen Schichten auf diesem Substrat angebracht ist. Die Gesamtdicke der elektrisch leitfähigen Schicht auf einem Substrat ergibt sich aus der Summe der Dicke aller einzelnen, durch Barriereschichten voneinander getrennten, elektrisch leitfähigen Schichten auf diesem Substrat. Der auf das erste Substrat folgende Schichtstapel elektrisch leitfähiger Schichten, die optional durch Barriereschichten separiert sind, ergibt dabei die erste elektrisch leitfähige Schicht. Die erste elektrisch leitfähige Schicht gemeinsam mit den eventuell in ihr vorhandenen Barriereschichten stellt in ihrer Gesamtheit die erste Flächenelektrode dar. Auf der ersten elektrisch leitfähigen Schicht ist die aktive Schicht abgeschieden und darauf befindet sich die zweite elektrisch leitfähige Schicht. Die zweite elektrisch leitfähige Schicht umfasst optional ebenfalls Barriereschichten, die die einzelnen Schichtfragmente der zweiten elektrisch leitfähigen Schicht voneinander separieren. Diese Barriereschichten und die Schichtabschnitte der zweiten elektrisch leitfähigen Schicht ergeben in ihrer Gesamtheit die zweite Flächenelektrode.

Die erste elektrisch leitfähige Schicht und/oder die zweite elektrisch leitfähige Schicht enthalten erfindungsgemäß 2 bis 15, besonders bevorzugt 2 bis 6 elektrisch isolierende Barriereschichten. Je höher die Anzahl der Barriereschichten desto höher ist auch die Fehlertoleranz der elektrisch schaltbaren Verglasung. Um einen Kurzschluss zu vermeiden, muss auch nach Entstehung des Defekts eine elektrisch isolierende Barriereschicht zwischen erster elektrisch leitfähiger Schicht und zweiter elektrisch leitfähiger Schicht erhalten werden. In der Praxis ist jedoch nicht zuverlässig absehbar, welcher Anteil des Schichtstapels beschädigt wird, da verschiedene Mechanismen zur Entstehung von Defekten führen und die Geometrie des entstehenden delaminierten Bereichs nicht vollständig vorhergesehen werden kann. Mit steigender Anzahl an Barriereschichten innerhalb einer elektrisch leitfähigen Schicht steigt die Wahrscheinlichkeit, dass mindestens eine Barriereschicht nach Delamination zurückbleibt. Nach Delamination sind dabei zwei verschiedene Defektszenarien denkbar. Einerseits kann die Delamination genau bis zu einer Barriereschicht erfolgen, die dann zwischen dem verbleibenden Anteil der ersten leitfähigen Schicht und der zweiten leitfähigen Schicht liegt, wobei nur ein sehr geringer defektinduzierter Kurzschlussstrom fließt. Die Größe dieses verbleibenden defektinduzierten Kurzschlussstroms wird dabei maßgeblich durch die Leitfähigkeit der Barriereschicht bestimmt. Andererseits kann ein Schichtanteil der ersten elektrisch leitfähigen Schicht oberhalb der Barrierschicht verbleiben, wodurch ein Kurzschluss zwischen diesem Schichtanteil der ersten elektrisch leitfähigen Schicht und der zweiten elektrisch leitfähigen Schicht entsteht. Mittels der Erfindung wird mindestens eine der elektrisch leitfähigen Schichten jedoch in mehrere, durch Barriereschichten getrennte, Einzelschichten aufgeteilt, deren Flächenwiderstand mit abnehmender Schichtdicke zunimmt. Je dünner die oberhalb der Barriereschicht (zwischen Barriereschicht und der anderen elektrisch leitfähigen Schicht gegenteiliger Polarität) verbleibende elektrisch leitfähige Schicht, desto höher ihr Flächenwiderstand und desto geringer der entstehende Kurzschlussstrom. Durch diese erfindungsgemäße Senkung des Kurzschlussstroms ist auch der für den Betrachter optisch sichtbare Defekt der elektrisch schaltbaren Verglasung zu minimieren. Mit steigender Anzahl Barriereschichten pro elektrisch leitfähiger Schicht sinkt die Schichtdicke der einzelnen Schichtabschnitte, bei gleichbleibender Gesamtdicke der elektrisch leitfähigen Schicht. Dadurch kann sichergestellt werden, dass nach Delamination kein oder ein möglichst kleiner Schichtanteil einer leitfähigen Schicht oberhalb der obersten Barriereschicht verbleibt. Die Verwendung mehrerer Barriereschichten pro elektrisch leitfähiger Schicht verbessert die Defekttoleranz der Verglasung mit aktiver Schicht somit weiter. Mit der Anzahl der im Produktionsprozess aufzutragenden Barriereschichten steigen allerdings auch die Herstellungskosten. Ein besonders gutes Verhältnis von kostengünstiger Herstellbarkeit des Produkts und Fehlertoleranz der elektrisch schaltbaren Verglasung wird bei 2 bis 6 elektrisch isolierenden Barriereschichten innerhalb mindestens einer der elektrisch leitenden Schichten erzielt.

In einer bevorzugten Ausführungsform ist der an die aktive Schicht grenzende Schichtanteil der ersten elektrisch leitfähigen Schicht und/oder der zweiten elektrisch leitfähigen Schicht kleiner oder gleich 50 % bezogen auf die Gesamtdicke der jeweiligen elektrisch leitfähigen Schichten. Somit liegt mindestens die Hälfte der elektrisch leitfähigen Schicht unterhalb der Barriereschicht und ist bezüglich eines möglichen Kurzschlusses durch die Barriereschicht geschützt. Eine Halbierung der Dicke der einzelnen elektrisch leitfähigen Schichten durch die Barriereschicht führt zu einer Verdopplung des Flächenwiderstands im Vergleich zu einer elektrisch leitfähigen Schicht gleicher Gesamtdicke ohne Barriereschicht. Der oberhalb der Barriereschicht liegende Anteil der elektrisch leitfähigen Schicht sollte nicht über 50% betragen, da bei Auftreten einer Delamination höchstwahrscheinlich dieser obere Anteil der elektrisch leitfähigen Schicht betroffen ist. Sofern es zu einem Kurzschluss kommt, ist der auftretende Kurzschlussstrom möglichst gering zu halten, d.h. der Flächenwiderstand der betroffenen elektrisch leitfähigen Schicht sollte möglichst hoch sein. Dies wird durch die erfindungsgemäße Aufteilung der elektrisch leitfähigen Schicht in einen oberhalb der Barriereschicht befindlichen Anteil von kleiner oder gleich 50% und einen unterhalb der Barriereschicht befindlichen Anteil von größer oder gleich 50% erreicht.

Gemäß der Erfindung enthalten die erste elektrisch leitfähige Schicht und/oder die zweite elektrisch leitfähige Schicht mindestens zwei elektrisch isolierende Barriereschichten. Dadurch ist eine verbesserte Defekttoleranz der Verglasung zu erreichen, da selbst wenn eine der Barriereschichten bei Delamination abgetragen wird, eine weitere Barriereschicht vorhanden ist und des Weiteren die elektrisch leitfähige Schicht in dünnere Einzelschichten höheren Schichtwiderstands unterteilt wird. Dies ist besonders vorteilhaft, um unabhängig von der Schichttiefe, bis zu der die Delamination eines Partikels stattfindet, den auftretenden Strom bei Kurzschluss zweier elektrisch leitfähiger Schichten möglichst gering zu halten.

Bevorzugt enthalten die erste elektrisch leitfähige Schicht und/oder die zweite elektrisch leitfähige Schicht mindestens zwei elektrisch isolierende Barriereschichten, wobei der Schichtanteil der elektrisch leitfähigen Einzelschichten an der Gesamtdicke einer elektrisch leitfähigen Schicht vom nächstliegenden Substrat in Richtung der aktiven Schicht abnimmt. Sofern auf die zweite elektrisch leitfähige Schicht kein zweites Substrat folgt, so erfolgt die Betrachtung in diesem Fall trotzdem von dieser Seite ausgehend in Richtung der aktiven Schicht. Demnach liegt der prozentual größte Anteil der elektrisch leitfähigen Schicht in direkter Nachbarschaft zum Substrat, gefolgt von einer Barriereschicht, einem weiteren Schichtanteil der elektrisch leitfähigen Schicht und mindestens einer weiteren Barriereschicht und einem weiteren Schichtanteil der elektrisch leitfähigen Schicht. Die Wahrscheinlichkeit, dass ein bestimmter Schichtanteil nach Delamination eines Partikels offen liegt steigt je nach Lage der Schicht vom Substrat in Richtung der aktiven Schicht an. Je näher ein Schichtabschnitt an der aktiven Schicht liegt, desto wahrscheinlicher ist es, dass die darüber liegenden Schichten bei einer Delamination verloren gehen und der freiliegende Anteil der elektrisch leitfähigen Schicht an einem Kurzschluss beteiligt ist. Insofern ist es vorteilhaft, die Dicke der elektrisch leitfähigen Einzelschichten vom Substrat in Richtung der aktiven Schicht zu senken und damit den Flächenwiderstand der Einzelschichten in gleicher Richtung zu erhöhen.

In einer vorteilhaften erfindungsgemäßen Ausführungsform enthalten die erste elektrisch leitfähige Schicht und die zweite elektrisch leitfähige Schicht jeweils zwei elektrisch isolierende Barriereschichten, wobei der Schichtaufbau dem Folgenden entspricht:

- erstes Substrat,
- erste elektrisch leitfähige Schicht mit zwei Barriereschichten, wobei ein Schichtanteil von mindestens 50%, bezogen auf die Gesamtschichtdicke der ersten elektrisch leitfähigen Schicht, in direkter Nachbarschaft zum ersten Substrat angeordnet ist und darauf eine Barriereschicht, ein weiterer Abschnitt der ersten elektrisch leitfähigen Schicht, eine weitere Barriereschicht und schließlich ein Abschnitt der ersten elektrisch leitfähigen Schicht mit einer Schichtdicke von 5% bis 25%, bevorzugt von 10% bis 20%, folgen,
- aktive Schicht,
- zweite elektrisch leitfähige Schicht mit zwei Barriereschichten, wobei ein Abschnitt der zweiten elektrisch leitfähigen Schicht mit einer Schichtdicke von 5% bis 25%, bevorzugt von 10% bis 20%, in direkter Nachbarschaft zur aktiven Schicht liegt und darauf eine Barriereschicht, ein weiterer Abschnitt der zweiten elektrisch leitfähigen Schicht, eine weitere Barriereschicht und schließlich ein Abschnitt der zweiten elektrisch leitfähigen Schicht mit einer Schichtdicke von mindestens 50%, bezogen auf die Gesamtschichtdicke der zweiten elektrisch leitfähigen Schicht, folgen.

Eine derartige Anordnung hat sich als besonders vorteilhaft erwiesen, da sie sowohl über eine hohe Defekttoleranz verfügt, als auch eine ausreichende Leitfähigkeit in direkter Nachbarschaft zur elektrisch leitfähigen Schicht besitzt. Optional ist auf der zweiten elektrisch leitfähigen Schicht ein zweites Substrat aufgebracht.

Die elektrisch leitfähigen Schichten sind bevorzugt transparent. Die elektrisch leitfähigen Schichten enthalten bevorzugt zumindest ein Metall, eine Metalllegierung oder ein transparentes leitfähiges Oxid *(transparent conducting oxide,* TCO). Die elektrisch leitfähigen Schichten enthalten besonders bevorzugt Silber, Gold, Kupfer, Nickel, Chrom, Wolfram, Graphit, Molybdän und/oder ein transparentes leitfähiges Oxid, bevorzugt Indium-Zinnoxid (ITO), Fluor-dotiertes Zinnoxid $(SnO_2{:}F)$, Antimon-dotiertes Zinnoxid, Aluminium-dotiertes Zinkoxid, Bor-dotiertes Zinkoxid oder Gallium-dotiertes Zinkoxid.

In einer ersten bevorzugten Ausführungsform wird ein Metall als Material der elektrisch leitfähigen Schichten gewählt, wobei die erste elektrisch leitfähige Schicht und/oder die zweite elektrisch leitfähige Schicht eine Gesamtschichtdicke von jeweils 1 nm bis 50 nm, bevorzugt 2 nm bis 30 nm, besonders bevorzugt 3 nm bis 15 nm aufweist. Die Dicke der einzelnen, durch Barriereschichten getrennten, Schichtanteile der elektrisch leitfähigen ersten Schicht und der elektrisch leitfähigen zweiten Schicht ergibt in Summe somit jeweils die genannte Gesamtschichtdicke. Damit werden eine vorteilhafte elektrische Kontaktierung der aktiven Schicht und eine gute horizontale Leitfähigkeit der Schichten erreicht.

In einer zweiten bevorzugten Ausführungsform umfassen die elektrisch leitfähigen Schichten ein transparentes leitfähiges Oxid, wobei die erste elektrisch leitfähige Schicht und die zweite elektrisch leitfähige Schicht eine Gesamtdicke von 20 nm bis 2 $\mu$m, besonders bevorzugt von 50 nm bis 1 $\mu$m, ganz besonders bevorzugt von 100 nm bis 600 nm und insbesondere von 300 nm bis 500 nm aufweisen. Damit werden eine vorteilhafte elektrische Kontaktierung der aktiven Schicht und eine gute horizontale Leitfähigkeit der Schichten erreicht.

Die durch Barriereschichten unterteilten Abschnitte der elektrisch leitfähigen Schichten können auch in ihrer Zusammensetzung voneinander abweichen. Dies ist vorteilhaft, da in einer derartigen Ausführungsform nur die Materialzusammensetzung des oberen Abschnitts der elektrisch leitfähigen Schichten, der unmittelbar die aktive Schicht kontaktiert, mit dem Material der aktiven Schicht kompatibel sein muss. Für die anderen Schichtabschnitte der elektrisch leitfähigen Schichten besteht dabei eine wesentlich höhere Flexibilität der verwendbaren Materialien. So können beispielsweise die der aktiven Schicht abgewandten Schichtabschnitte aus einem preisgünstigeren Material gefertigt werden, während die der aktiven Schicht benachbarten Abschnitte der elektrisch leitfähigen Schicht aus einem höherwertigen Material mit entsprechend besseren Eigenschaften hergestellt werden. Die Materialzusammensetzung der ersten elektrisch leitfähigen Schicht und der zweiten elektrisch leitfähigen Schicht selbst können ebenfalls voneinander abweichen.

Die elektrisch leitfähigen Schichten mit elektrisch isolierenden Barriereschichten sind dafür vorgesehen, mit zumindest einer externen Spannungsquelle auf an sich bekannte Art elektrisch verbunden zu werden, um als Flächenelektroden der Verglasung mit elektrisch schaltbaren Eigenschaften zu dienen. Die elektrische Verbindung erfolgt durch geeignete Verbindungskabel, beispielsweise Folienleiter, welche optional über sogenannte Sammelleiter (bus bars), beispielsweise Streifen eines elektrisch leitfähigen Materials oder elektrisch leitfähige Aufdrucke, mit den elektrisch leitfähigen Schichten verbunden werden. Das Anbringen der Verbindungskabel an die elektrisch leitfähigen Schichten kann beispielsweise durch Löten, Kleben oder Einlegen erfolgen.

Die elektrisch isolierenden Barriereschichten haben eine wesentlich geringere Leitfähigkeit als die umgebenden elektrisch leitfähigen Schichten, so dass die vertikale Leitfähigkeit des Gesamtschichtaufbaus aus leitfähiger Schicht und Barriereschicht durch Einbringen der Barriereschicht gesenkt wird. Die elektrisch isolierenden Barriereschichten müssen dabei trotzdem eine gewisse Leitfähigkeit besitzen, da für eine uneingeschränkte Funktion des elektrisch schaltbaren Elements ein Elektronentransport zur aktiven Schicht benötigt wird. Insofern sind erfindungsgemäß unter dem Begriff "elektrisch isolierende Barriereschichten" solche Barriereschichten zu verstehen, die eine geringe elektrische Leitfähigkeit aufweisen, welche wesentlich kleiner ist als jene der elektrisch leitfähigen Schichten.

Zur Realisierung geeigneter Barriereschichten lassen sich Materialien verschiedener Leitfähigkeit verwenden, wobei die Schichtdicke der Barriereschicht mit steigender Leitfähigkeit des Materials ansteigt. Je höher die effektive vertikale Leitfähigkeit des Materials desto dicker muss die Barriereschicht gewählt werden um die gewünschte elektrisch isolierende Wirkung der Barriereschicht zu erreichen. Als Materialien für die elektrisch isolierenden Barriereschichten eignen sich somit besonders dotierte oder undotierte Metalloxide und/oder Nitride, bevorzugt Tantaloxid, Titanoxid, Siliciumoxid, Zirconiumoxid, Hafniumoxid, Yttriumoxid, Aluminiumoxid, Aluminiumnitrid, Siliciumnitrid und/oder Gemische davon. Dotierte Metalloxide oder -nitride werden, aufgrund ihrer höheren Leitfähigkeit, in einer höheren Schichtdicke als undotierte Metalloxide oder -nitride verwendet.

Innerhalb einer leitfähigen Schicht können die in diese leitfähige Schicht eingebrachten Barriereschichten in ihrer Zusammensetzung und Schichtdicke voneinander abweichen. Um eine besonders wirksame elektrische Isolation zu erreichen kann beispielsweise eine Barriereschicht aus Siliciumoxid und zwei Barriereschichten aus Siliciumnitrid oder zwei Barriereschichten aus Siliciumoxid und eine Barriereschicht aus Siliciumnitrid verwendet werden. Die Barriereschichten werden dabei bevorzugt so angeordnet, dass eine alternierende Reihenfolge der Materialien der Barriereschichten entsteht.

Bei Verwendung von undotierten Metalloxiden oder -nitriden werden diese bevorzugt in einer Schichtdicke von jeweils höchstens 100 nm, bevorzugt 2 nm bis 50 nm, besonders bevorzugt 5 nm bis 30 nm eingesetzt. Die Gesamtdicke aller innerhalb einer elektrisch leitfähigen Schicht eingebrachten Barriereschichten beträgt dabei 10 nm bis 500 nm, bevorzugt 20 nm bis 300 nm. Bei undotierten Metalloxiden oder -nitriden ist demnach schon die Abscheidung vergleichsweise dünner Schichten ausreichend um eine gute elektrisch isolierende Wirkung zu erzielen. Da jedoch reproduzierbare Restleitfähigkeit der elektrisch isolierenden Barriereschichten gewünscht ist, werden im Abscheidungsprozess kontrolliert Defekte in die Barrierenschichten eingebracht. Diese erhöhen die Leitfähigkeit der Barriereschichten, so dass die aktive Schicht hinreichend elektrisch angebunden ist.

Alternativ dazu werden dotierte Metalloxide oder -nitride als Barriereschichten eingesetzt. Diese haben eine höhere Leitfähigkeit und werden in einer größeren Schichtdicke abgeschieden als undotierte Schichten. In diesem Fall wird die gewünschte Leitfähigkeit der Barriereschichten mittels des Dotierungsgrades eingestellt. Dies ist besonders vorteilhaft, da dieser Parameter im Beschichtungsprozess sehr einfach kontollierbar ist. Die elektrisch isolierenden Barriereschichten besitzen in diesem Fall eine Dicke von jeweils 10 nm bis 1000 nm, bevorzugt 50 nm bis 500 nm, besonders bevorzugt 100 nm bis 300 nm, wobei die Gesamtdicke aller innerhalb einer elektrisch leitfähigen Schicht eingebrachten elektrisch isolierenden Barriereschichten 10 nm bis 3000 nm, bevorzugt 100 nm bis 1000 nm, beträgt. Diese Bereiche haben sich als geeignet erwiesen um eine ausreichende Restleitfähigkeit vertikal zum Schichtaufbau zu gewährleisten.

Ein Beispiel für ein sehr gut als Barriereschicht geeignetes dotiertes Metalloxid ist golddotiertes Tantaloxid.

Der Schichtwiderstand der ersten Flächenelektrode und der zweiten Flächenelektrode beträgt in Summe bevorzugt $0,01\,\Omega_\square$ bis $100\,\Omega_\square$, besonders bevorzugt $0,1\,\Omega_\square$ bis $20\,\Omega_\square$, ganz besonders bevorzugt $0,5\,\Omega_\square$ bis $5\,\Omega_\square$. In diesem Bereich ist ein hinreichend großer Stromfluss zwischen den Elektroden der schaltbaren Verglasung sichergestellt, der eine optimale Funktionsweise der aktiven Schicht ermöglicht. Der angegebene Wertebereich gilt dabei sowohl für Ausführungsformen, in denen nur die erste Flächenelektrode oder die zweite Flächenelektrode mehrere Barriereschichten umfassen, als auch in Fällen, in denen beide Elektroden mit Barriereschichten ausgestattet sind.

Für die Flächenelektroden, die Barriereschichten umfassen, ist die elektrische Leitfähigkeit parallel zum Schichtstapel (horizontale Leitfähigkeit) 10 bis 1000 Mal größer als die Leitfähigkeit lateral zum Schichtstapel (vertikale Leitfähigkeit), wodurch sich die erfindungsgemäße anisotrope Leitfähigkeit der Flächenelektroden ergibt.

Der Schichtwiderstand der elektrisch leitfähigen Schichten ergibt sich dabei aus den Schichtwiderständen der einzelnen Schichtabschnitte der jeweiligen elektrisch leitfähigen Schicht. Wird eine elektrisch leitfähige Schicht beispielsweise von zwei Barriereschichten in drei Schichtabschnitte mit den Widerständen $R_1$, $R_2$ und $R_3$ unterteilt, so ergibt sich der Schichtwiderstand der elektrisch leitfähigen Schicht als:

$$R_\square = \frac{1}{1/R_1 + 1/R_2 + 1/R_3}$$

Das Produkt aus spezifischem Widerstand und Schichtdicke für die einzelnen elektrisch isolierenden Barriereschichten beträgt erfindungsgemäß jeweils zwischen $10^7$ $\Omega$m $\times$ nm und $10^{13}$ $\Omega$m $\times$ nm, bevorzugt zwischen $10^8$ $\Omega$m $\times$ nm und $10^{12}$ $\Omega$m $\times$ nm, besonders bevorzugt zwischen $10^9$ $\Omega$m $\times$ nm und $10^{11}$ $\Omega$m $\times$ nm. Der Fachmann kann daraus für ein als Barriereschicht gewünschtes Material die erforderliche Schichtdicke berechnen, oder auch bei einer vorgegebenen Schichtdicke darauf schließen welchen spezifischen Widerstand das eingesetzte Material haben sollte.

Das eigentliche schaltbare Funktionselement der erfindungsgemäßen Verglasung kann prinzipiell jedes dem Fachmann an sich bekannte Funktionselement mit elektrisch schaltbaren optischen Eigenschaften sein. Die Ausgestaltung der aktiven Schicht richtet sich nach der Art des Funktionselements.

Bei der aktiven Schicht der erfindungsgemäßen Verglasung kann es sich um ein beliebiges dem Fachmann bekanntes Funktionselement handeln. Insbesondere ist die Erfindung auf großflächige schaltbare Elemente gerichtet, wobei pixelbasierte Anzeigemedien konkret ausgeschlossen werden. Die schaltbare Fläche einer Verglasung beträgt bevorzugt mindestens 1 mm². Bevorzugt handelt es sich bei der aktiven Schicht um ein mit Gleichstrom betriebenes Funktionselement, besonders bevorzugt ein elektrochromes Funktionselement. Die genannten Konfigurationen der Barriereschichten sind besonders geeignet in Kombination mit mittels Gleichstrom betriebenen Funktionselementen. Eine Verwendung in Kombination mit wechselstrombasierten Technologien wie beispielsweise SPD (suspended particle device) und PDLC (Polymer dispersed liquid crystal) ist jedoch denkbar. Eine entsprechende Anpassung der Barriereschichten ist für den Fachmann mittels einfacher Versuche möglich.

In einer besonders vorteilhaften Ausgestaltung der Erfindung enthält die Verglasung ein elektrochromes Funktionselement. Dabei umfasst die aktive Schicht bevorzugt eine elektrochrome Schicht, die benachbart zur ersten elektrisch leitfähigen Schicht angeordnet ist, einen Elektrolyten benachbart zur elektrochromen Schicht und eine Gegenelektrode benachbart zum Elektrolyten und zur zweiten elektrisch leitfähigen Schicht. Die Transmission von sichtbarem Licht ist vom Einlagerungsgrad von Ionen in die elektrochrome Schicht abhängig, wobei die Ionen von der Gegenelektrode durch den Elektrolyten hindurch zur elektrochromen Schicht wandern. Die Transmission kann durch die an die erste elektrisch leitfähige Schicht und die zweite elektrisch leitfähige Schicht angelegte Spannung, welche diese Wanderung der Ionen hervorruft, beeinflusst werden. Geeignete elektrochrome Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

In einer alternativen Ausführungsform enthält die aktive Schicht keinen Elektrolyten, wobei die elektrochrome Schicht selbst als Elektrolyt fungiert. So kann beispielsweise Wolframoxid je nach Oxidationszustand die Funktion eines Elektrolyten übernehmen. Derartige Ausführungsformen sind beispielsweise in US 2014/0022621 A1 offenbart. Besonders sei auf Figur 4F der US 2014/0022621 A1 verwiesen.

Die Verglasung kann natürlich außer der aktiven Schicht und den elektrisch leitfähigen Schichten mit elektrisch isolierenden Barriereschichten weitere an sich bekannte Schichten aufweisen, beispielsweise Antireflexions- oder Reflexionsschichten, Schutzschichten und/oder Glättungsschichten.

Der Schichtstapel aus elektrisch leitfähigen Schichten mit Barriereschichten und der aktiven Schicht kann sowohl unmittelbar, als auch mittelbar, bevorzugt unmittelbar auf den Substraten aufgebracht sein.

In einer alternativen Ausgestaltung der erfindungsgemäßen Verglasung sind die elektrisch leitfähigen Schichten mittelbar über eine Polymerfolie mit einer Seite der Substrate verbunden. Die Polymerfolie enthält bevorzugt Polyethylenterephthalat und/oder Polyurethan. In einer bevorzugten Ausgestaltung werden die elektrisch leitfähigen Schichten auf einer Folie aus Polyethylenterephthalat angeordnet und anschließend mit Klebefolien laminiert. Der Schichtverbund wird dann auf einer Seite der Scheibe angeordnet und befestigt, beispielsweise durch die Klebefolie. Erfindungsgemäße Klebefolien enthalten beispielsweise Polyurethan. Dies hat den besonderen Vorteil, dass die empfindlichen elektrisch leitfähigen Schichten durch den Schichtverbund stabilisiert und gegen mechanische Einwirkungen geschützt werden. Der Schichtverbund lässt sich besonders einfach und kostengünstig verarbeiten.

In einer weiteren alternativen Ausgestaltung der Erfindung sind die elektrisch leitfähigen Schichten mittelbar über ein Trägerglas mit einer Seite der Substrate verbunden. Das Trägerglas umfasst beispielsweise Kalk-Natron-Glas, Quarzglas oder Borosilikatglas und kann in seiner Zusammensetzung von dem Substrat abweichen, aber auch eine identische Zusammensetzung aufweisen. In einer bevorzugten Ausgestaltung werden die elektrisch leitfähigen Schichten auf dem Trägerglas abgeschieden und anschließend mit Klebefolien laminiert. Der Schichtverbund wird dann auf einer Seite des Substrats angeordnet und befestigt, beispielsweise durch die Klebefolie. Erfindungsgemäße Klebefolien enthalten beispielsweise Polyurethan. Dies hat den besonderen Vorteil, dass die empfindlichen elektrisch leitfähigen Schichten durch den Schichtverbund stabilisiert und gegen mechanische Einwirkungen geschützt werden. Der Schichtverbund lässt sich besonders einfach und kostengünstig verarbeiten.

Die Substrate enthalten bevorzugt Glas, besonders bevorzugt Flachglas, Floatglas, Quarzglas, Borosilikatglas, Kalk-Natron-Glas oder klare Kunststoffe, besonders bevorzugt starre klare Kunststoffe, beispielsweise Polycarbonat oder Polymethylmethacrylat. Die Substrate können klar und transparent sein oder auch getönt oder gefärbt. Die Dicke der Substrate kann breit variieren und so den Erfordernissen im Einzelfall angepasst werden. Die Dicke jedes Substrats beträgt bevorzugt zwischen 0,1 mm und 15 mm, besonders bevorzugt zwischen 0,5 mm und 5 mm. Die Verglasung kann eine beliebige dreidimensionale Form aufweisen. Die Verglasung ist bevorzugt plan oder leicht oder stark in einer Richtung oder in mehreren Richtungen des Raumes gebogen.

Die erfindungsgemäße Verglasung kann sowohl ein Substrat als auch darüber hinausgehend mehrere Substrate umfassen. Diese können beispielsweise als Verbundscheibe oder aber auch als Isolierverglasung, deren Scheiben über einen Abstandshalter verbunden sind, ausgeführt sein. Dem Fachmann sind derartige Aufbauten hinreichend bekannt. Im Allgemeinen wird der Aufbau so gewählt, dass das elektrochrome Funktionselement innen liegend ausgeführt ist und somit geschützt ist.

Die Erfindung umfasst außerdem ein Verfahren zur Herstellung einer erfindungsgemäßen Verglasung mit elektrisch schaltbaren Eigenschaften, wobei mindestens:

    a) ein erstes Substrat bereitgestellt wird,
    b) eine erste elektrisch leitfähige Schicht aufgebracht wird,
    c) eine aktive Schicht aufgebracht wird und
    d) eine zweite elektrisch leitfähige Schicht aufgebracht wird,

wobei in den Schritten b) und/oder d) jeweils 2 bis 15 elektrisch isolierende Barriereschichten innerhalb der ersten elektrisch leitfähigen Schicht und/oder der zweiten elektrisch leitfähigen Schicht aufgebracht wird.

Bevorzugt erfolgt die Abscheidung der ersten elektrisch leitfähigen Schicht und/oder der zweiten elektrisch leitfähigen Schicht in den Schritten b) und/oder d) alternierend mit der Abscheidung der elektrisch isolierenden Barriereschichten.

Die elektrisch leitfähigen Schichten und/oder die Barriereschichten werden durch physikalische Gasphasenabscheidung (PVD) oder chemische Gasphasenabscheidung (CVD), bevorzugt Kathodenzerstäuben, besonders bevorzugt magnetfeldunterstütztes Kathodenzerstäuben (Magnetronsputtering) auf dem Substrat bzw. den vorher abgeschiedenen Schichten aufgebracht. Geeignete Prozessparameter sind dem Fachmann hinlänglich bekannt.

Alternativ können die elektrisch leitfähigen Schichten und/oder die Barriereschichten auch in Form von Nanopartikeln auf das Substrat gedruckt und anschließend gesintert werden um eine homogene Schicht zu erhalten.

Das Verfahren zur Abscheidung der aktiven Schicht variiert abhängig von deren Ausgestaltung. Bereits im Zuge der möglichen Ausgestaltungen der aktiven Schicht wurde auf diverse Veröffentlichungen verwiesen, die auch dem Fachmann bereits bekannte geeignete Verfahren zur Abscheidung derartiger Schichten enthalten.

In einer bevorzugten Ausgestaltung des Verfahrens wird als aktive Schicht ein elektrochromes Funktionselement aufgebracht, wobei zunächst eine elektrochrome Schicht, optional ein Elektrolyt und danach eine Gegenelektrode abgeschieden werden.

Die Erfindung wird im Folgenden anhand von Zeichnungen erläutert. Die Zeichnungen sind rein schematische Darstellungen und nicht maßstabsgetreu. Die Zeichnungen schränken die Erfindung in keiner Weise ein.

Es zeigen:

Figur 1    eine nicht beanspruchte Verglasung mit einem elektrochromen Funktionselement als aktive Schicht und zwei elektrisch leitfähigen Schichten als Flächenelektroden, wobei in jede elektrisch leitfähige Schicht jeweils eine elektrisch isolierende Barriereschicht eingebracht ist,

Figur 2    eine erfindungsgemäße Verglasung mit einem elektrochromen Funktionselement als aktive Schicht und zwei elektrisch leitfähigen Schichten als Flächenelektroden, wobei in jede elektrisch leitfähige Schicht jeweils zwei elektrisch isolierende Barriereschichten eingebracht sind,

Figur 3    eine erfindungsgemäße Verglasung mit einem elektrochromen Funktionselement als aktive Schicht und zwei elektrisch leitfähigen Schichten als Flächenelektroden, wobei in jede elektrisch leitfähige Schicht jeweils drei elektrisch isolierende Barriereschichten eingebracht sind,

Figur 4    eine weitere bevorzugte Ausführung der Verglasung mit einem elektrochromen Funktionselement als aktive Schicht und zwei elektrisch leitfähigen Schichten als Flächenelektroden, wobei in jede elektrisch leitfähige Schicht jeweils zwei elektrisch isolierende Barriereschichten eingebracht sind.

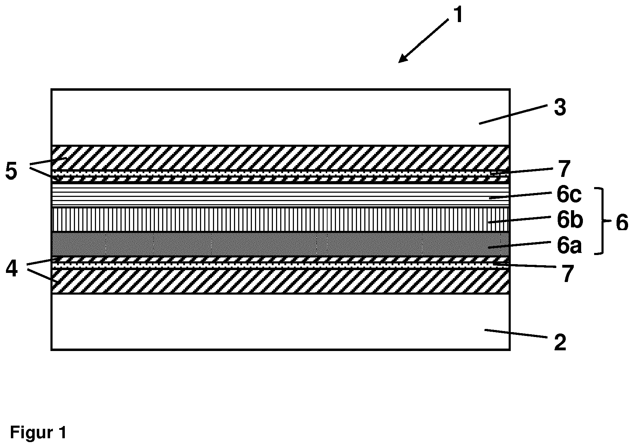

Figur 1 zeigt eine Verglasung 1 mit einem elektrochromen Funktionselement als aktive Schicht 6 und zwei elektrisch leitfähigen Schichten 4, 5, wobei in jede elektrisch leitfähige Schicht 4, 5 jeweils eine elektrisch isolierende Barriereschicht 7 eingebracht ist. Die Barriereschichten 7 ergeben gemeinsam mit der jeweiligen elektrisch leitfähigen Schicht 4, 5 die Flächenelektroden der Verglasung. Auf einem ersten Substrat 2 bestehend aus Kalk-Natron-Glas mit einer Dicke von 2,1 mm ist eine erste elektrisch leitfähige Schicht 4 aus Indium-Zinn-Oxid (ITO) mit einer Gesamtdicke von 400 nm abgeschieden. Die erste elektrisch leitfähige Schicht 4 enthält eine elektrisch isolierende Barriereschicht 7 bestehend aus dotiertem Tantaloxid mit einer Dicke von 20 nm, wobei 90% der ersten elektrisch leitfähigen Schicht 4 unterhalb der Barriereschicht 7 in direkter Nachbarschaft zum Substrat liegen, darauf die Barriereschicht 7 folgt und auf der Barriereschicht der verbleibende Anteil (10% der Gesamtdicke) der ersten elektrisch leitfähigen Schicht 4 folgt. Auf dem ersten Substrat 2 befindet sich demnach ein Abschnitt der ersten elektrisch leitfähigen Schicht 4 mit einer Dicke von 360 nm (90% der Gesamtdicke), die elektrisch isolierende Barriereschicht 7 mit einer Dicke von 20 nm und ein Abschnitt der ersten elektrisch leitfähigen Schicht 4 mit einer Dicke von 40 nm (10% der Gesamtdicke). In unmittelbarem Kontakt zu diesem dünneren Abschnitt der ersten elektrisch leitfähigen Schicht 4 steht die aktive Schicht 6, die aus einer elektrochromen Schicht 6a aus kathodischem elektrochromen Material aus Wolframoxid (WO$_3$) mit einer Dicke von 350 nm, einem zweischichtigen Elektrolyten 6b, bestehend aus einer Schicht hydratisiertem Tantaloxid mit einer Dicke von 100 nm und einer Schicht hydratisiertem Antimonoxid ebenfalls mit einer Dicke von 10 nm, sowie einer Gegenelektrode 6c umfassend ein anodisches elektrochromes Material aus hydratisiertem Iridiumoxid IrO$_x$ mit einer Dicke von etwa 50 nm, besteht. Unmittelbar benachbart zur Gegenelektrode 6c schließt die zweite elektrisch leitfähige Schicht 5, bestehend aus Indium-Zinn-Oxid (ITO), an die aktive Schicht 6 an. Auch auf dieser Seite der aktiven Schicht 6 besteht erfindungsgemäß einen unmittelbarer Kontakt zur elektrisch leitfähigen Schicht, wodurch eine gute elektrische Kontaktierung der aktiven Schicht 6 und somit eine fehlerfreie Funktionalität der elektrisch schaltbaren Verglasung 1 gewährleistet ist. Der in direktem Kontakt zur Gegenelektrode 6c stehende Teil der zweiten elektrisch leitfähigen Schicht 5 hat eine Dicke von 10% (40 nm) bezogen auf die Gesamtdicke der zweiten elektrisch leitfähigen Schicht von 400 nm. Im Anschluss an diesen dünneren Abschnitt der zweiten elektrisch leitfähigen Schicht ist eine elektrisch isolierende Barriereschicht 7 bestehend aus dotiertem Tantaloxid mit einer Dicke von 20 nm in die elektrisch leitfähige Schicht eingebracht, worauf der verbleibende Schichtanteil der zweiten elektrisch leitfähigen Schicht 5 mit einer Dicke von 360 nm (90% der Gesamtdicke) folgt. Der Schichtstapel wird durch ein zweites Substrat 3 aus Kalk-Natron-Glas mit einer Dicke von 2,1 mm abgeschlossen, das über eine Laminationsfolie (nicht gezeigt) mit dem Schichtstapel verbunden ist.

Dieser Aufbau hat sich in der Praxis als besonders vorteilhaft erwiesen. Die elektrisch leitfähigen Schichten 4, 5 mit elektrisch isolierenden Barriereschichten 7 verfügen über eine anisotrope Leitfähigkeit, wobei die horizontale Leitfähigkeit (parallel zur Schicht) möglichst hoch sein sollte um eine gute elektrische Kontaktierung zu gewährleisten und die vertikale Leitfähigkeit (senkrecht zur Schicht) nur so groß sein sollte wie es für die uneingeschränkte Funktion der aktiven Schicht 6 notwendig ist. Wesentlich für eine solche fehlerfreie Funktion der aktiven Schicht 6 ist dabei eine direkte elektrische Kontaktierung zwischen erster elektrisch leitfähiger Schicht 4 und elektrochromer Schicht 6a bzw. zweiter elektrisch leitfähiger Schicht 5 und Gegenelektrode 6c sowie ein geringer Kontaktwiderstand an diesen Schichtübergängen. Dies ist gegeben. Die elektrisch leitfähigen Schichten 4, 5 werden durch die Barriereschichten 7 in mehrere Schichtanteile unterteilt, deren Flächenwiderstand durch diese erfindungsgemäße Aufteilung in Schichten geringerer Dicke erhöht wird. Da der Flächenwiderstand der Einzelschicht (im Vergleich zu einer Gesamtschicht ohne Barriereschichten) erhöht ist, tritt im Fall eines Kurzschlusses dieser Einzelschicht mit einem Schichtanteil entgegengesetzter Polarität ein geringerer Kurzschlussstrom auf. Der Defekt ist somit in weitaus geringerem Maße sichtbar und für den Betrachter optisch weniger auffällig. In Versuchen ergibt sich, dass die Anzahl der Verglasungen, die aufgrund von Defekten nicht verkäuflich sind, mit der erfindungsgemäßen Lösung um 90 % reduziert werden kann im Vergleich zu Verglasungen nach dem Stand der Technik.

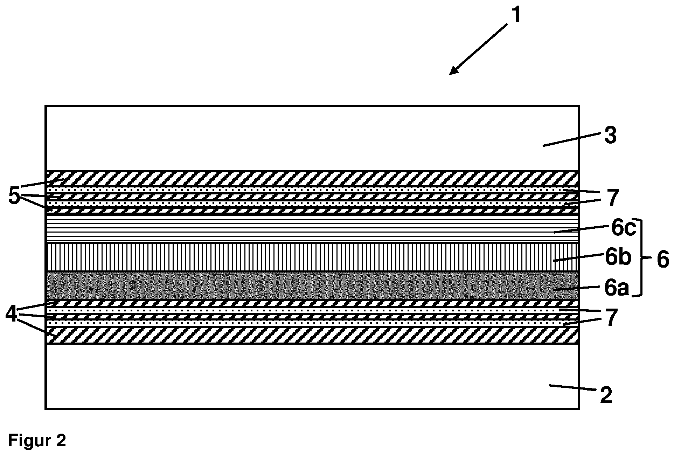

Figur 2 zeigt eine erfindungsgemäße Verglasung 1 mit einem elektrochromen Funktionselement als aktive Schicht 6 und zwei elektrisch leitfähigen Schichten 4, 5, wobei in jede elektrisch leitfähige Schicht 4, 5 jeweils zwei elektrisch isolierende Barriereschichten 7 eingebracht sind. Der grundsätzliche Aufbau entspricht dem in Figur 1 gezeigten, wobei gemäß Figur 2 jeweils zwei elektrisch isolierende Barriereschichten 7 in jede elektrisch leitfähiger Schicht 4, 5 eingebracht sind. Dabei ergibt sich eine Schichtabfolge aus einem ersten Substrat 2, einer ersten elektrisch leitfähigen Schicht 4 beinhaltend zwei Barriereschichten 7, einer aktiven Schicht 6, einer zweiten elektrisch leitfähigen Schicht 5 beinhaltend zwei Barriereschichten 7 und einem zweiten Substrat 3. An das erste Substrat 2 schließen ein Abschnitt der ersten elektrisch leitfähigen Schicht 4 mit einer Dicke von 200 nm (50% der Gesamtdicke), eine elektrisch isolierende Barriereschicht 7 mit einer Dicke von 20 nm, ein Abschnitt der ersten elektrisch leitfähigen Schicht 4 mit einer Dicke von 120 nm (30% der Gesamtdicke), eine weitere elektrisch isolierende Barriereschicht 7 mit einer Dicke von 20 nm und ein Abschnitt der ersten elektrisch leitfähigen Schicht 4 mit einer Dicke von 80 nm (20% der Gesamtdicke) an. Darauf folgt die aktive Schicht 6, die in unmittelbarem Kontakt zum letztgenannten Anteil der ersten elektrisch leitfähigen Schicht 4 steht. Die Zusammensetzung der aktiven Schicht 6 entspricht der in Figur 1 beschriebenen. Auf die aktive Schicht 6 folgt eine ein Abschnitt der ersten elektrisch leitfähigen Schicht 5 mit einer Dicke von 80 nm (20% der Gesamtdicke), eine elektrisch isolierende Barriereschicht 7 mit einer Dicke von 20 nm, ein Abschnitt der ersten elektrisch leitfähigen Schicht 5 mit einer Dicke von 120 nm (30% der Gesamtdicke), eine weitere elektrisch isolierende Barriereschicht 7 mit einer Dicke von 20 nm und ein Abschnitt der ersten elektrisch leitfähigen Schicht 5 mit einer Dicke von 200 nm (50% der Gesamtdicke), wobei der erstgenannte Abschnitt der elektrisch leitfähigen Schicht (Dicke 80 nm) in direktem elektrischen Kontakt zur aktiven Schicht 6 steht. Der Schichtstapel wird von einem zweiten Substrat 3 abgeschlossen, das über eine Laminationsfolie (nicht gezeigt) mit dem Schichtstapel verbunden ist.

Diese erfindungsgemäße Ausführungsform stellt eine weitere Verbesserung des in Figur 1 gezeigten Aufbaus dar. Da pro elektrisch leitfähiger Schicht 4, 5 zwei Barriereschichten 7 vorhanden sind wird die Defekttoleranz der Verglasung bereits dadurch erhöht, dass eine weitere Barriereschicht vorhanden ist, sofern die darüber liegende Barriereschicht Teil des delaminierten Bereichs ist. Darüber hinaus werden die elektrisch leitfähigen Schichten mit steigender Zahl der verwendeten Barriereschichten in immer dünnere Einzelschichten aufgeteilt. Der Flächenwiderstand dieser Schichten verhält sich umgekehrt proportional zur Schichtdicke, wodurch der Flächenwiderstand der Einzelschichten mit steigender Anzahl der Barriereschichten, die in eine elektrisch leitfähige Schicht eingebracht werden, steigt. Diese Erhöhung des Flächenwiderstands ist vorteilhaft im Hinblick auf eine Verringerung des Kurzschlussstroms bei Auftreten eines Kurzschlusses. Die Barriereschichten können eine elektrisch leitfähige Schicht in Einzelschichten gleicher Schichtdicke teilen oder auch, wie in Figur 2 der Fall, in Schichten unterschiedlicher Dicke. Dabei hat sich gezeigt, dass ein Anstieg der Dicke der elektrisch leitfähigen Einzelschichten von der aktiven Schicht 6 ausgehend jeweils in Richtung des nächstliegenden Substrats 2, 3 besonders vorteilhaft ist. Je näher sich ein Schichtfragment zur aktiven Schicht befindet, desto wahrscheinlicher ist dieses Fragments von einer lokalen Delamination betroffen. Somit ist es erstrebenswert die Schichtdicke der elektrisch leitfähigen Einzelschichten in Richtung der aktiven Schicht 6 zu senken und damit den Flächenwiderstand in gleicher Richtung zu erhöhen.

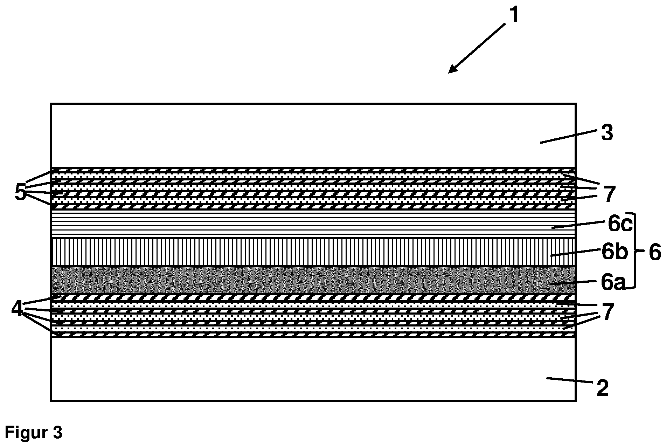

Figur 3 zeigt eine erfindungsgemäße Verglasung 1 mit einem elektrochromen Funktionselement als aktive Schicht 6 und zwei elektrisch leitfähigen Schichten 4, 5, wobei in jede elektrisch leitfähige Schicht 4, 5 jeweils drei elektrisch isolierende Barriereschichten 7 eingebracht sind. Der grundsätzliche Aufbau entspricht dem in Figur 1 gezeigten, wobei gemäß Figur 3 jeweils drei elektrisch isolierende Barriereschichten 7 in jede elektrisch leitfähiger Schicht 4, 5 eingebracht sind. An das erste Substrat 2 schließt dabei ein Abschnitt der ersten elektrisch leitfähigen Schicht 4 mit einer Dicke von 100 nm (25% der Gesamtdicke), eine elektrisch isolierende Barriereschicht 7 mit einer Dicke von 20 nm, ein Abschnitt der ersten elektrisch leitfähigen Schicht 4 mit einer Dicke von 100 nm (25% der Gesamtdicke), eine weitere elektrisch isolierende Barriereschicht 7 mit einer Dicke von 20 nm, ein Abschnitt der ersten elektrisch leitfähigen Schicht 4 mit einer Dicke von 100 nm (25% der Gesamtdicke), eine weitere elektrisch isolierende Barriereschicht 7 mit einer Dicke von 20 nm und ein Abschnitt der ersten elektrisch leitfähigen Schicht 4 mit einer Dicke von 100 nm (25% der Gesamtdicke) an. Darauf folgt die aktive Schicht 6, die in unmittelbarem Kontakt zum letztgenannten Anteil der ersten elektrisch leitfähigen Schicht 4 steht. Die Zusammensetzung der aktiven Schicht 6 entspricht der in Figur 1 beschriebenen. Auf die aktive Schicht 6 folgt die zweite elektrisch leitfähige Schicht 5 umfassend drei elektrisch isolierende Barriereschichten 7, wobei der Schichtaufbau dem soeben beschriebenen Aufbau der ersten elektrisch leitfähigen Schicht 4 entspricht und die zweite elektrisch leitfähige Schicht 5 durch die Barriereschichten 7 in vier Einzelschichten gleicher Größe geteilt wird. Der der aktiven Schicht 6 nächstliegende Abschnitt der elektrisch leitfähigen Schicht 5 steht in unmittelbarem elektrischen Kontakt zur aktiven Schicht 6. Der Schichtstapel wird von einem zweiten Substrat 3 abgeschlossen.

Die Defekttoleranz der erfindungsgemäßen Verglasung 1 kann durch Einbringen weiterer Barriereschichten weiter verbessert werden.

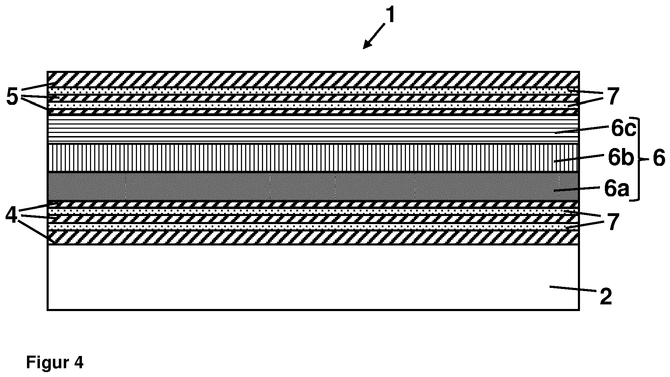

Figur 4 zeigt eine erfindungsgemäße Verglasung mit elektrochromen Funktionselement als aktive Schicht 6 und zwei elektrisch leitfähigen Schichten 4, 5, wobei in jede elektrisch leitfähige Schicht 4, 5 jeweils zwei elektrisch isolierende Barriereschichten 7 eingebracht sind. Dabei ergibt sich eine Schichtabfolge aus einem ersten Substrat 2, einer ersten elektrisch leitfähigen Schicht 4 beinhaltend zwei Barriereschichten 7, einer aktiven Schicht 6 und einer zweiten elektrisch leitfähigen Schicht 5 beinhaltend zwei Barriereschichten 7. Der grundsätzliche Aufbau entspricht dem in Figur 2 gezeigten, wobei gemäß Figur 4 kein zweites Substrat als Abschluss des Schichtstapels vorhanden ist und der Aufbau der Schichten wie im Folgenenden erläutert abweicht. Die Verglasung in Figur 4 kann beispielsweise in einem Isolierglas verwendet werden, wobei die zweite elektrisch leitfähige Schicht zum Verglasungsinnenraum des Isolierglases zeigt und so vor Umwelteinflüssen geschützt ist. Alternativ kann auch ein zweites Substrat analog zu der in Figur 2 gezeigten Anordnung aufgebracht sein. Gemäß Figur 4 schließen an das erste Substrat 2 ein Abschnitt der ersten elektrisch leitfähigen Schicht 4 bestehend aus ZnO:Al mit einer Dicke von 300 nm (ca. 61,2 % der Gesamtdicke) und einem Schichtwiderstand von $R_\square = 10\,\Omega$, eine elektrisch isolierende Barriereschicht 7 aus $SiO_2$ mit einer Dicke von 10 nm, ein Abschnitt der ersten elektrisch leitfähigen Schicht 4 aus ZnO:Al mit einer Dicke von 150 nm (ca. 30,6 % der Gesamtdicke) und einem Schichtwiderstand von $R_\square = 20\,\Omega$, eine weitere elektrisch isolierende Barriereschicht 7 aus $SiO_2$ mit einer Dicke von 10 nm und ein Abschnitt der ersten elektrisch leitfähigen Schicht (4) aus ITO mit einer Dicke von 40 nm (ca. 8,2 % der Gesamtdicke) und einem Schichtwiderstand von $R_\square = 40\,\Omega$ an. Darauf folgt die aktive Schicht 6, die in unmittelbarem Kontakt zum letztgenannten Anteil der ersten elektrisch leitfähigen Schicht 4 steht. Die Zusammensetzung der aktiven Schicht 6 entspricht der in Figur 1 beschriebenen. Auf die aktive Schicht 6 folgt ein Abschnitt der ersten elektrisch leitfähigen Schicht 5 aus ITO mit einer Dicke von 40 nm (ca. 8,2 % der Gesamtdicke) und einem Schichtwiderstand von $R_\square = 40\,\Omega$, eine elektrisch isolierende Barriereschicht 7 aus $SiO_2$ mit einer Dicke von 10 nm, ein Abschnitt der ersten elektrisch leitfähigen Schicht 5 aus ZnO:Al mit einer Dicke von 150 nm (ca. 30,6 % der Gesamtdicke) und einem Schichtwiderstand von $R_\square = 20\,\Omega$, eine weitere elektrisch isolierende Barriereschicht 7 aus $SiO_2$ mit einer Dicke von 10 nm und ein Abschnitt der ersten elektrisch leitfähigen Schicht 5 aus ZnO:Al mit einer Dicke von 300 nm (ca. 61,2 % der Gesamtdicke) und einem Schichtwiderstand von $R_\square = 10\,\Omega$, wobei der erstgenannte Abschnitt der elektrisch leitfähigen Schicht 5 mit einer Dicke von 40 nm in direktem elektrischen Kontakt zur aktiven Schicht 6 steht. Der spezifische Widerstand der Barriereschichten aus $SiO_2$ beträgt $10^9\,\Omega m$. Aus den Schichtwiderständen der einzelnen Schichten ergibt sich für jede der Flächenelektroden aus elektrisch leitfähiger Schicht und dazugehörigen Barriereschichten ein Widerstand von $R_\square = 5,7\,\Omega$.

Diese erfindungsgemäße Ausführungsform stellt eine weitere Verbesserung der in Figur 2 gezeigten Ausführungsform da. Neben den dort erläuterten Vorteilen ergeben sich gemäß Figur 4 weitere Vorteile aus der Materialauswahl der verschiedenen Abschnitte der elektrisch leitfähigen Schichten 4, 5. Die zur aktiven Schicht 6 benachbarten Abschnitte der elektrisch leitfähigen Schichten 4, 5 bestehen aus Indium-Zinn-Oxid (ITO), das eine sehr gute Kompatibilität zu dem Materialien der aktiven Schicht 6 aufweist. Ferner stellt ITO einen sehr gut geeigneten Untergrund zur Abscheidung der aktiven Schicht 6 dar, so dass ein sauberes Aufwachsen der aktiven Schicht 6 im Abscheideprozess gewährleistet ist. Die nicht in Kontakt zur aktiven Schicht 6 stehenden Schichtabschnitte der elektrisch leitfähigen Schichten 4, 5 bestehen aus aluminiumdotiertem Zinkoxid (ZnO:Al). Dieses ist wesentlich preisgünstiger als ITO und stellt dennoch einen guten Kompromiss bezüglich Eigenschaften wie Transmission und Leitfähigkeit dar.

Bezugszeichen

(1) Verglasung
(2) erstes Substrat
(3) zweites Substrat
(4) erste elektrisch leitfähige Schicht
(5) zweite elektrisch leitfähige Schicht
(6) aktive Schicht
(6a) elektrochrome Schicht
(6b) Elektrolyt
(6c) Gegenelektrode
(7) elektrisch isolierende Barriereschicht

## Patentansprüche

1. Verglasung (1) mit elektrisch schaltbaren Eigenschaften mindestens umfassend in der Reihenfolge flächenmäßig angeordnet:

    - ein erstes Substrat (2),
    - eine erste elektrisch leitfähige Schicht (4),
    - eine aktive Schicht (6) und
    - eine zweite elektrisch leitfähige Schicht (5)

    wobei die erste elektrisch leitfähige Schicht (4) und/oder die zweite elektrisch leitfähige Schicht (5) mindestens zwei Barriereschichten (7) enthalten, die flächig innerhalb der ersten elektrisch leitfähigen Schicht (4) und/oder zweiten elektrisch leitfähigen Schicht (5) angeordnet sind und die erste elektrisch leitfähige Schicht (4) und/oder die zweite elektrisch leitfähige Schicht (5) jeweils in mindestens drei Schichtabschnitte aus gleichem Material unterteilen, wobei das Produkt aus spezifischem elektrischem Widerstand und Schichtdicke für jede Barriereschicht (7) zwischen $10^7\,\Omega m \times nm$ und $10^{13}\,\Omega m \times nm$ liegt und wobei die Barriereschicht (7) von den Schichtabschnitten der ersten elektrisch leitfähigen Schicht (4) und/oder zweiten elektrisch leitfähiger Schicht (5) jeweils flächenmäßig vollständig bedeckt ist,
    wobei die erste elektrisch leitfähige Schicht (4) und/oder die zweite elektrisch leitfähige Schicht (5) unmittelbar an die aktive Schicht (6) grenzen, und wobei die erste elektrisch leitfähige Schicht (4) und/oder die zweite elektrisch leitfähige Schicht (5) jeweils 2 bis 15 Barriereschichten (7) enthalten.

2. Verglasung (1) nach Anspruch 1, bei welcher die erste elektrisch leitfähige Schicht (4) und/oder die zweite elektrisch leitfähige Schicht (5) jeweils 2 bis 6 Barriereschichten (7) enthalten.

3. Verglasung (1) nach Anspruch 1 oder 2, bei welcher die Barriereschichten (7) die erste elektrisch leitfähige Schicht (4) und/oder die zweite elektrisch leitfähige Schicht (5) so durchlaufen, dass ein Schichtanteil von mindestens 1% der Gesamtdicke der elektrisch leitfähigen Schichten (4, 5) zwischen der zur aktiven Schicht (6) nächstgelegenen Barriereschicht (7) und der aktiven Schicht (6) angeordnet ist.

4. Verglasung (1) nach einem der Ansprüche 1 bis 3, bei welcher innerhalb der ersten elektrisch leitfähigen Schicht (4) und/oder zweiten elektrisch leitfähigen Schicht (5) der an die aktive Schicht (6) grenzende Schichtanteil der elektrisch leitfähigen Schichten (4, 5) kleiner oder gleich 50 % der Gesamtdicke der jeweiligen elektrisch leitfähigen Schichten (4, 5) beträgt.

5. Verglasung nach einem der Ansprüche 1 bis 4, bei welcher die erste elektrisch leitfähige Schicht (4) und/oder die zweite elektrisch leitfähige Schicht (5) Silber, Gold, Kupfer, Nickel, Chrom, Wolfram, Graphit, Molybdän und/oder ein transparentes leitfähiges Oxid, bevorzugt Indium-Zinnoxid (ITO), Fluordotiertes Zinnoxid ($SnO_2$:F), Antimon-dotiertes Zinnoxid, Bor-dotiertes Zinkoxid, Aluminium-dotiertes Zinkoxid oder Gallium-dotiertes Zinkoxid enthalten.

6. Verglasung (1) nach einem der Ansprüche 1 bis 4, bei welcher die erste elektrisch leitfähige Schicht (4) und/oder die zweite elektrisch leitfähige Schicht (5) ein transparentes leitfähiges Oxid mit einer Gesamtschichtdicke von jeweils 20 nm bis 2 $\mu$m aufweisen.

7. Verglasung (1) nach einem der Ansprüche 1 bis 6, bei welcher die Barriereschichten (7) undotierte Metalloxide oder Metallnitride enthalten und eine Dicke von jeweils höchstens 100 nm aufweisen.

8. Verglasung (1) nach einem der Ansprüche 1 bis 6, bei welcher die Barriereschichten (7) dotierte Metalloxide oder Metallnitride enthalten und eine Dicke von jeweils höchstens 1000 nm aufweisen.

9. Verglasung (1) nach einem der Ansprüche 1 bis 8, bei welcher die aktive Schicht (6) ein elektrochromes Funktionselement ist.

10. Verglasung (1) nach Anspruch 9, bei welcher das elektrochrome Funktionselement mindestens eine elektrochrome Schicht (6a) benachbart zur ersten elektrisch leitfähigen Schicht (4), einen Elektrolyten (6b) benachbart zur elektrochromen Schicht (6a) und eine Gegenelektrode (6c) benachbart entweder zum Elektrolyten (6b) oder zur elektrochromen Schicht (6a), sowie benachbart zur zweiten elektrisch leitfähigen Schicht (5), umfasst.

11. Verglasung (1) nach einem der Ansprüche 1 bis 10, wobei das erste Substrat (2) und das zweite Substrat (3) Glas oder Polymere enthalten.

12. Verfahren zur Herstellung einer Verglasung mit elektrisch schaltbaren Eigenschaften nach einem der Ansprüche 1 bis 11 mindestens umfassend die Schritte:

    a) Bereitstellen des ersten Substrats (2),
    b) Aufbringen der ersten elektrisch leitfähigen Schicht (4),
    c) Aufbringen der aktiven Schicht (6) und
    d) Aufbringen der zweiten elektrisch leitfähigen Schicht (5) wobei in den Schritten b) und/oder d) jeweils 2 bis 15 Barriereschichten (7) innerhalb der ersten elektrisch leitfähigen Schicht (4) und/oder der zweiten elektrisch leitfähigen Schicht (5) aufgebracht werden.

13. Verfahren nach Anspruch 12
    , wobei in den Schritten b) und/oder d) die Abscheidung der ersten elektrisch leitfähigen Schicht (4) und/oder der zweiten elektrisch leitfähigen Schicht (5) alternierend mit der Abscheidung der Barriereschichten (7) erfolgt.

14. Verwendung einer Verglasung (1) nach einem der Ansprüche 1 bis 11 in Gebäuden oder in Fortbewegungsmitteln für den Verkehr auf dem Lande, in der Luft oder zu Wasser.

**Claims**

1. Glazing (1) with electrically switchable properties at least comprising, areally arranged in sequence:

    - a first substrate (2),
    - a first electrically conductive layer (4),
    - an active layer (6), and
    - a second electrically conductive layer (5)

    wherein the first electrically conductive layer (4) and/or the second electrically conductive layer (5) contain at least two barrier layers (7), which are areally arranged within the first electrically conductive layer (4) and/or the second electrically conductive layer (5) and divide the first electrically conductive layer (4) and/or the second electrically conductive layer (5) in each case into at least three layer sections made of the same material, wherein the product of the specific electric resistance and layer thickness for each barrier layer (7) is between $10^7$ $\Omega$m $\times$ nm and $10^{13}$ $\Omega$m x nm, and wherein the barrier layer (7) is in each case completely covered areally by the layer sections of the first electrically conductive layer (4) and/or the second electrically conductive layer (5),
    wherein the first electrically conductive layer (4) and/or the second electrically conductive layer (5) are directly adjacent the active layer (6), and wherein the first electrically conductive layer (4) and/or the second electrically conductive layer (5) contain in each case 2 to 15 barrier layers (7).

2. Glazing (1) according to claim 1, in which the first electrically conductive layer (4) and/or the second electrically conductive layer (5) contain in each case 2 to 6 barrier layers (7).

3. Glazing (1) according to claim 1 or 2, in which the barrier layers (7) pass through the first electrically conductive layer (4) and/or the second electrically conductive layer (5) such that a layer portion of at least 1% of the total thickness of the electrically conductive layers (4, 5) is arranged between the barrier layer (7) nearest to the active layer (6) and the active layer (6).

4. Glazing (1) according to one of claims 1 through 3, in which within the first electrically conductive layer (4) and/ or the second electrically conductive layer (5), the layer portion of the electrically conductive layers (4, 5) adjacent the active layer (6) is less than or equal to 50% of the total thickness of the respective electrically conductive layers (4, 5).

5. Glazing according to one of claims 1 through 4, in which wherein the first electrically conductive layer (4) and/or the second electrically conductive layer (5) contain silver, gold, copper, nickel, chromium, tungsten, graphite, molybdenum, and/or a transparent conductive oxide, preferably indium tin oxide (ITO), fluorine-doped tin oxide ($SnO_2$:F), antimony-doped tin oxide, boron-doped zinc oxide, aluminum-doped zinc oxide, or gallium-doped zinc oxide.

6. Glazing (1) according to one of claims 1 through 4, in which the first electrically conductive layer (4) and/or the second electrically conductive layer (5) have a transparent conductive oxide with a total layer thickness of, in each case, 20 nm to 2 $\mu$m.

7. Glazing (1) according to one of claims 1 through 6, in which the barrier layers (7) contain non-doped metal oxides or metal nitrides and have a thickness of, in each case, at most 100 nm.

8. Glazing (1) according to one of claims 1 through 6, in which the barrier layers (7) contain doped metal oxides or metal nitrides and have a thickness of, in each case, at most 1000 nm.

9. Glazing (1) according to one of claims 1 through 8, in which the active layer (6) is an electrochromic functional element.

10. Glazing (1) according to claim 9, in which the electrochromic functional element comprises at least an electrochromic layer (6a) adjacent the first electrically conductive layer (4), an electrolyte (6b) adjacent the electrochromic layer (6a), and a counter electrode (6c) adjacent either the electrolyte (6b) or the electrochromic layer (6a), as well as adjacent the second electrically conductive layer (5).

11. Glazing (1) according to one of claims 1 through 10, wherein the first substrate (2) and the second substrate (3) contain glass or polymers.

12. Method for producing a glazing with electrically switchable properties according to one of claims 1 through 11, at least comprising the steps:

   a) Providing the first substrate (2),
   b) Applying the first electrically conductive layer (4),
   c) Applying the active layer (6), and
   d) Applying the second electrically conductive layer (5)

   wherein in the steps b) and/or d) in each case 2 to 15 barrier layers (7) are applied within the first electrically conductive layer (4) and/or the second electrically conductive layer (5).

13. Method according to claim 12, wherein in the steps b) and/or d) the deposition of the first electrically conductive layer (4) and/or of the second electrically conductive layer (5) is done alternatingly with the deposition of the barrier layers (7).

14. Use of a glazing (1) according to one of claims 1 through 11 in buildings or in means of transportation for travel on land, in the air, or on water.

**Revendications**

1. Vitrage (1) avec des propriétés électriquement commutables comprenant au moins, disposés en séquence dans l'espace :

   - un premier substrat (2),
   - une première couche électriquement conductrice (4),
   - une couche active (6), et
   - une deuxième couche électriquement conductrice (5)

   dans lequel la première couche électriquement conductrice (4) et/ou la deuxième couche électriquement conductrice (5) contiennent au moins deux couches barrières (7) qui sont disposées à l'intérieur de la première couche électriquement conductrice (4) et/ou de la deuxième couche électriquement conductrice (5) et qui divisent la première couche électriquement conductrice (4) et/ou la deuxième couche électriquement conductrice (5) respectivement en au moins trois sections de couche constituées du même matériau, dans lequel le produit de la résistance électrique spécifique et de l'épaisseur de couche pour chaque couche barrière (7) est compris entre $10^7 \, \Omega\text{m} \times \text{nm}$ et $10^{13} \, \Omega\text{m} \times \text{nm}$, et dans lequel la couche barrière (7) est à chaque fois complètement recouverte en surface par les sections de couche de la première couche électriquement conductrice (4) et/ou de la deuxième couche électriquement conductrice (5),

dans lequel la première couche électriquement conductrice (4) et/ou la deuxième couche électriquement conductrice (5) sont directement adjacentes à la couche active (6), et dans lequel la première couche électriquement conductrice (4) et/ou la deuxième couche électriquement conductrice (5) contiennent chacune 2 à 15 couches barrières (7).

2. Vitrage (1) selon la revendication 1, dans lequel la première couche électriquement conductrice (4) et/ou la deuxième couche électriquement conductrice (5) contiennent chacune 2 à 6 couches barrières (7).

3. Vitrage (1) selon la revendication 1 ou 2, dans lequel les couches barrières (7) traversent la première couche électriquement conductrice (4) et/ou la deuxième couche électriquement conductrice (5) de telle sorte qu'une portion de couche d'au moins 1% de l'épaisseur totale des couches électriquement conductrices (4, 5) est disposée entre la couche barrière (7) la plus proche de la couche active (6) et la couche active (6).

4. Vitrage (1) selon l'une des revendications 1 à 3, dans lequel à l'intérieur de la première couche électriquement conductrice (4) et/ou de la deuxième couche électriquement conductrice (5), la portion de couche des couches électriquement conductrices (4, 5) adjacentes à la couche active (6) est inférieure ou égale à 50% de l'épaisseur totale des couches électriquement conductrices (4, 5) respectives.

5. Vitrage selon l'une des revendications 1 à 4, dans lequel la première couche électriquement conductrice (4) et/ou la seconde couche électriquement conductrice (5) contiennent de l'argent, de l'or, du cuivre, du nickel, du chrome, du tungstène, du graphite, du molybdène et/ou un oxyde conducteur transparent, de préférence de l'oxyde d'indium-étain (ITO), de l'oxyde d'étain dopé au fluor ($SnO_2$:F), de l'oxyde d'étain dopé à l'antimoine, de l'oxyde de zinc dopé au bore, de l'oxyde de zinc dopé à l'aluminium ou de l'oxyde de zinc dopé au gallium.

6. Vitrage (1) selon l'une des revendications 1 à 4, dans lequel la première couche électriquement conductrice (4) et/ou la deuxième couche électriquement conductrice (5) présentent un oxyde conducteur transparent avec une épaisseur de couche totale de, respectivement, 20 nm à 2 $\mu$m.

7. Vitrage (1) selon l'une des revendications 1 à 6, dans lequel les couches barrières (7) contiennent des oxydes métalliques ou des nitrures métalliques non dopés et ont une épaisseur, dans chaque cas, d'au plus 100 nm.

8. Vitrage (1) selon l'une des revendications 1 à 6, dans lequel les couches barrières (7) contiennent des oxydes métalliques ou des nitrures métalliques dopés et ont une épaisseur, dans chaque cas, d'au plus 1000 nm.

9. Vitrage (1) selon l'une des revendications 1 à 8, dans lequel la couche active (6) est un élément fonctionnel électrochrome.

10. Vitrage (1) selon la revendication 9, dans lequel l'élément fonctionnel électrochrome comprend au moins une couche électrochrome (6a) adjacente à la première couche électriquement conductrice (4), un électrolyte (6b) adjacent à la couche électrochrome (6a), et une contre-électrode (6c) adjacente soit à l'électrolyte (6b) soit à la couche électrochrome (6a), ainsi qu'adjacente à la deuxième couche électriquement conductrice (5).

11. Vitrage (1) selon l'une des revendications 1 à 10, dans lequel le premier substrat (2) et le second substrat (3) contiennent du verre ou des polymères.

12. Procédé de fabrication d'un vitrage à propriétés électriquement commutables selon l'une des revendications 1 à 11, comprenant au moins les étapes suivantes :

a) fournir le premier substrat (2),
b) appliquer la première couche électriquement conductrice (4),
c) appliquer la couche active (6), et
d) appliquer la deuxième couche électriquement conductrice (5)

dans les étapes b) et/ou d), 2 à 15 couches barrières (7) étant appliquées à l'intérieur de la première couche électriquement conductrice (4) et/ou de la deuxième couche électriquement conductrice (5).

13. Procédé selon la revendication 12, dans lequel, dans les étapes b) et/ou d), le dépôt de la première couche électriquement conductrice (4) et/ou de la deuxième couche électriquement conductrice (5) est effectué en alternance avec le dépôt des couches barrières (7).

14. Utilisation d'un vitrage (1) selon l'une des revendications 1 à 11 dans des bâtiments ou dans des moyens de transport pour des déplacements sur terre, dans les airs ou sur l'eau.

**Figur 1**

Figur 2

**Figur 3**

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120026573 A1
- WO 2012007334 A1
- WO 2015032535 A1
- US 20140022621 A1
- EP 2660652 A1
- DE 112012006778 T5
- WO 2010032070 A1
- WO 2010147494 A1
- EP 1862849 A1